# EUROPEAN PATENT APPLICATION

(11) **EP 2 865 518 A1**
(43) Date of publication of application: **29.04.2015**
(21) Application number: 12880110.7
(22) Date of filing: 26.06.2012
(51) Int. Cl.: B32B 7/02, B32B 5/22

(54) **METHOD FOR MANUFACTURING NON-WOVEN COMPOSITE LAYER PRODUCT WITH DIFFERENT HARDNESSES**

(71) Applicant: San Shiang Technology Co., Ltd., Tainan City, Taiwan (TW)
(72) Inventor: LIN, Mingyang, Tianan City Taiwan (TW)
(74) Representative: Chaillot, Geneviève
(86) International application number: PCT/CN2012/000874
(87) International publication number: WO 2014/000120

(57) **Abstract**

Disclosed is a method for manufacturing a non-woven composite layer product with different hardnesses, the non-woven composite layer product at least consisting of a hard layer with a thickness of between 2-7 mm and a weight of between 600-1200 g/m2, and a soft layer with a thickness of between 15-40 mm and a weight of between 600-1200 g/m2. The manufacturing method mainly comprises the steps of: sticking at least a first non-woven material to be pre-formed into a hard layer and a second non-woven material to be pre-formed into a soft layer to become an intermediate, and then feeding the intermediate into a baking oven at a constant temperature to heat at a heating temperature of 180±20°C over a duration of longer than at least 200 seconds (inclusive), such that the first non-woven material and the second non-woven material are fully heated to softening, and the contact surfaces are bound by hot melting; and then feeding into a mold with different material thicknesses for a one-time hot-press molding, so as to obtain a non-woven composite layer product containing a hard layer and a soft layer with required specifications.

## Description

### BACKGROUND OF THE INVENTION

### Field of the Invention

The present invention relates to a method for manufacturing non-woven composite layer product with different hardnesses, and more particularly to the manufacturing method of a product with a non-woven fabric composite layer whose hard layer and soft layer are processed by a primary hot press molding in a mold with unequal material thicknesses.

### Description of the Related Art

Non-woven fabric products manufacturing by a non-woven fabric formation technology is used extensively in our daily life, wherein some single-layer non-woven fabrics are used to manufacture products directly and some composite layer (at least two layers) non-woven fabrics are used for manufacturing products. For example, the non-woven fabric scouring pad available in the market is mainly divided into a single-layer product (usually in a green color), or a double-layer (composite-layer) product (usually with a green color on a side and a yellow color on the other side). In addition, seat cushion, back cushion and seeping cushion products are also divided into the single-layer and composite layer products as well.

Since non-woven fabrics with different hardnesses (or densities) can be formed by adjusting and controlling the manufacturing conditions such as pressure and/or temperature (or heating temperature) in the molding process, therefore when the composite-layer non-woven fabric is used for manufacturing products, the characteristics of different layers of different hardnesses can be used to manufacturing a double-sides product with different hardnesses on both sides to meet the requirements for different applications. For example, a composite-layer sleeping cushion can provide both hard and soft surfaces for the user's choice. To provide a comfortable ride and a good sound effect, the automobile interior material generally comes with both good sound absorption and sound insulation effects to insulate and absorb external high-frequency noises and sounds as well as the low frequency noise and resonance produced by the automobile. With poor sound absorption and sound insulation effects, it is difficult to convince consumers with the high value of a premium car, so that most conventional automobile interior materials are composite-layer non-woven fabric materials (with at least two layers and good sound absorption and sound insulation effects) to meet the requirements. In addition to the good sound absorption and sound insulation effects, the automobile interior material also requires a good texture (such as a soft contact surface). If the automobile interior material is installed at a position (such as the interior of a sheet metal) which is not in contact with the driver or passengers, a thick board material with a relatively high hardness is used as the automatable interior material. If the automobile interior material is installed at a position (such as the inner side of the car door or the seat cushions of the car) which is in contact with the driver or passengers, a soft material with a relatively low hardness is adopted, but the other side (which is the side not in contact with the driver or passenger) is still made of the thick board material with a relatively high hardness. Therefore, the conventional automobile interior material is generally made with both surfaces with.

To meet the requirement of having both surfaces with different hardnesses (densities) of the non-woven fabric product, the inventor of the present invention provided a design of controlling the heating conditions at different parts of the same material, so that the different parts of the material are heated and softened to different levels, and then the material is processed by compression molding to produce a material with different densities at different parts, and the invention was filed for a patent application entitled "Manufacturing method of the same material with parts of different densities" and was granted with R.O.C. Pat. No. I275469 and P.R.C. Pat. No. ZL200610007283.8. From the objectives and claims of the foregoing issued patents, the manufacturing method of the present invention is mainly applied to the same material, but most of the conventional products with a non-woven fabric composite layer are made of non-woven fabric materials of different hardnesses (which are different materials), and then the non-woven fabric material of different hardnesses are attached and coupled to each other to produce the expected product with the non-woven fabric composite layer. Obviously, the conventional manufacturing method of the non-woven fabric product is different from the R.O.C. Patent No. I275469.

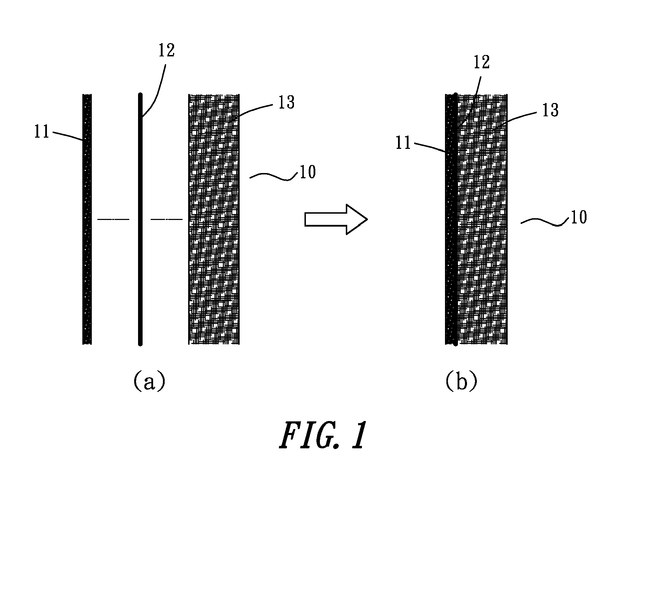

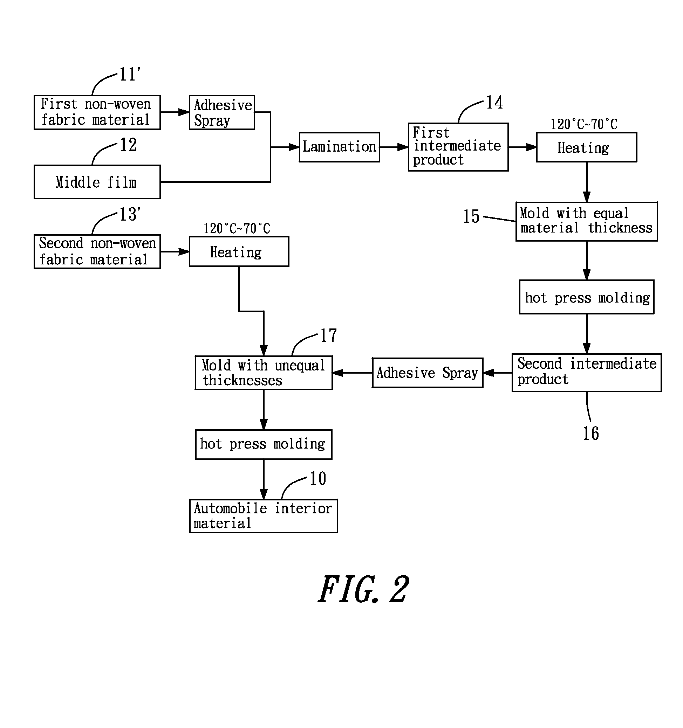

With reference to FIGS. 1(a), 1(b) and 2 for a schematic view of the structure of a conventional product with a non-woven fabric composite layer made of a conventional automobile interior material 10 and a manufacturing flow chart of the method of manufacturing the same respectively, FIG. 1(a) shows that the automobile interior material 10 comprises a hard layer 11, a middle film 12 and a soft layer 13, and the hard layer 11, the middle film 12 and the soft layer 13 are stacked and manufactured to produce finished goods of the automobile interior material 10 as shown in FIG. 1(b). In the industry, the hard layer 11 is commonly known as a "Cover Layer" having a specification with a thickness (t) of 3~7mm and a weight (w) of approximately 1000g/m²; the middle film 12 is commonly known as a "Film" which is a film barrier layer made of plastic and having a specification with a thickness (t) of approximately 50µ; and the soft layer 13 is commonly known as a "PAD" having a specification with a thickness (t) of 20~35mm and a weight (w) of approximately 1000g/m². Relatively, the hard layer 11 is a layer with a greater hardness, and the soft layer 13 is a layer with a smaller hardness, so that when the automobile interior material is installed, the hard layer 11 is installed at a position which is not in contact with the driver or passengers, and the soft layer 13 is installed at a position which is in contact with the driver or passengers.

The conventional manufacturing method for stacking the hard layer 11, the middle film 12 and the soft layer 13 to produce the product made of the automobile interior material 10 is shown in FIG. 1 (b) and the procedure of the conventional manufacturing method as shown in FIG. 2 comprises the following steps:
(1) Pre-mold a first non-woven fabric material 11' and a second non-woven fabric material 13' into the hard layer 11 and the soft layer 13, while manufacturing the middle film 12. In other words, the non-woven fabric material 11', the middle film 12 and the second non-woven fabric material 13' are prepared in advance.
(2) Spray an adhesive on a surface of the first non-woven fabric material 11', and then attach the first non-woven fabric material 11' onto the middle film 12 to produce a first intermediate product 14. In other words, each first intermediate product 14 is formed by attaching the first non-woven fabric material 11' to the middle film 12 by an adhesive spray process.
(3) Heat the first intermediate product 14 at a heating temperature of 120°C~70°C, and then put the first intermediate product 14 into a mold with equal material thickness 15 to perform a hot press molding of the first intermediate product 14 to produce a second intermediate product 16 comprising the hard layer 11 and the middle film 12 of the required specification. In other words, the manufactured second intermediate product 16 has the hard layer 11 of the required specification and the middle film 12 attached onto the surface of the hard layer 11.
(4) Put the second intermediate product 16 into a mold with unequal material thicknesses 17, and spray an adhesive on a surface of the middle film 12 of the second intermediate product 16, while heating the second non-woven fabric material 13' at a heating temperature of 120°C~70°C.
(5) Put the heated second non-woven fabric material 13' onto the second intermediate product 16 in a mold with unequal material thicknesses 17 and operate the mold with unequal material thicknesses 17 for a hot press molding to press and mold the second non-woven fabric material 13' into the soft layer 13 of the required specification, so as to manufacture the automobile interior material 10 comprised of the hard layer 11, the middle film 12 and the soft layer 13 of the required specification.

The structure and the manufacturing method of the aforementioned material which is a three-layer composite automobile interior material 10 are described above, wherein the hard layer 11 has the sound insulation effect, the soft layer 13 has the sound absorption effect and provide a good texture, and the middle film 12 is a barrier layer for improving the sound absorption and sound insulation performance. When the automobile interior material 10 is comprised of the hard layer 11, the middle film 12 and the soft layer 13, a better using effect is provided, but it also incurs a more complicated manufacturing process and a higher manufacturing cost. With the consideration of the effects and costs, a double-layer composite automobile interior material 10 is comprised of the hard layer 11 and the soft layer 13 only, so that the aforementioned manufacturing method no longer involves the middle film 12, the first intermediate product 14 and the second intermediate product 16, and just the mold with equal material thickness 15 is required for heating the first non-woven fabric material 11' to perform the hot press molding to produce the hard layer 11 of the required specification, and then the hot press molding is further performed in the mold with unequal material thicknesses 17 to produce the hard layer 11 and the heated second non-woven fabric material 13' is glued to produce the automobile interior material 10 including the hard layer 11 and the soft layer 13 of the required specification.

Since the inventor of the present invention is engaged with the work related to the design, development and manufacture of the non-woven fabric product, the inventor is familiar with the aforementioned conventional automobile interior material 10 regardless of the manufacturing method of manufacturing a three-layer composite material or a double-layer composite layer and finds from his work experience on the automobile interior materials 10 that the conventional manufacturing methods have the following drawbacks:
1. The hard layer 11 of the required specification is manufactured by performing the hot pressing molding of the first non-woven fabric material 11' in the mold with equal material thickness 15, and the soft layer 13 of the required specification is manufactured by performing the hot press molding of the second non-woven fabric material 13' in the mold with unequal material thicknesses 17, so that the conventional manufacturing method requires both forming molds including the mold with equal material thickness 15 and the mold with unequal material thicknesses 17, and two mold formation processes must be performed in the mold with equal material thickness 15 and the mold with unequal material thicknesses 17, so as to incur a higher manufacturing cost for the equipments and a longer manufacturing time, and decrease the production capacity.
2. The hard layer 11 is processed with the hot press molding in the mold with equal material thickness 15 first, and then put into the mold with unequal material thicknesses 17 and glued with the second non-woven fabric material 13' before being processed with the hot press molding to produce the automobile interior material 10 of the required specification. However, the hard layer 11 is shaped before it is put into the mold with unequal material thicknesses 17 (if the hard layer 11 is bent, its angle and shape are fixed), so that the hot press molding process taken place in the mold with unequal material thicknesses 17 mainly pushes the originally flat second non-woven fabric material 13' according to the inner-wall curved surface (or the curvature) of the mold to attaché the hard layer 11 with the same fixed curved surface, In other words, the fixed hard layer 11 no longer changes its shape to fit the second non-woven fabric material 13' during the hot press molding process taken place in the mold with unequal material thicknesses 17, but only the second non-woven fabric material 13' tries to change its shape to fit the hard layer 11, so that the second non-woven fabric material 13' sometimes may not be bent in time (due to a relatively large curvature) during the hot press molding process in the mold with unequal material thicknesses 17, and thus resulting in a poor attachment with the hard layer 11 to produce a hollow phenomenon and lower the expected sound absorption and insulation effects.

In the conventional manufacturing method of the product with the non-woven fabric composite layer, a hollow is produced at the bent position between the hard layer 11 and the soft layer 13 which is a serious problem to the quality of the product. Even though the hollow is not large, the material may peel off easily after a long time use of the product with a non-woven fabric composite layer particularly under the use with vibrations and pushing forces. Such peeling phenomenon becomes increasingly larger or quicker, so that the hollow phenomenon is absolutely a killer of the product with the non-woven fabric composite layer. However, there is no alternative manufacturing method provided, and the defects cannot be distinguished immediately by appearance, so that some manufacturers have to add the mold with unequal material thicknesses 17 to minimize the deformation of the soft layer 13 during the hot press molding process of the second non-woven fabric material 13' in order to maintain the curvature as close as possible to the curvature of the hard layer 11. Due to the prerequisites of the hard layer 11 and the soft layer 13 at different stages, the expected reduction of the hollow phenomenon is not high. Furthermore, the hot press molding process taken place in the mold with unequal material thicknesses 17 incurs a higher manufacturing cost, a longer manufacturing time, and a lower production capacity.

### SUMMARY OF THE INVENTION

In view of the aforementioned drawbacks of the prior art, the inventor of the present invention based on years of experience in the related industry to conduct extensive researches and experiments, and finally invented the present invention to overcome the drawbacks of the prior art.

Therefore, it is a primary objective of the present invention to provide a method of manufacturing a product with a non-woven fabric composite layer of different hardnesses and achieve the effects of lowering equipment costs, simplify manufacturing process, and improving production capacity and quality.

To achieve the foregoing objective, the present invention provides a method of manufacturing a product with a non-woven fabric composite layer of different hardnesses, and the product with the non-woven fabric composite layer comprises a hard layer and a soft layer, and the hard layer has a specification with a thickness of 2~7mm and a weight of 600~1200g/m², and the soft layer has a specification with a thickness of 15~40mm and a weight of 600~1200g/m², and the method comprises the following steps:
(1) Pre-mold a first non-woven fabric material to form the hard layer of the required specification and pre-mold a second non-woven fabric material to form the soft layer of the required specification.
(2) Attach the first non-woven fabric material to the second non-woven fabric material to produce an intermediate product.
(3) Heat the intermediate product in a constant-temperature oven at a heating temperature of 180±20°C for a heating time of at least 200 seconds per intermediate product to soften the first non-woven fabric material and the second non-woven fabric material sufficiently, and couple the attached surfaces by a thermal fusion process.
(4) Transfer the intermediate product from the constant-temperature oven to a mold with unequal material thicknesses to perform a primary hot press molding to press and mold the first non-woven fabric material into the hard layer of the required specification, and press and mold the second non-woven fabric material into the soft layer of the required specification, so as to manufacture the product with the non-woven fabric composite layer comprised of the hard layer and the soft layer of the required specifications.

In the aforementioned method of manufacturing a product with a non-woven fabric composite layer of different hardnesses, the product with the non-woven fabric composite layer further comprises a middle film disposed between the hard layer and the soft layer and made of plastic and molded into a film barrier layer with a thickness of 30~75µ; and the first non-woven fabric material and the middle film and a second non-woven fabric material are attached to each other to produce an intermediate product in the manufacture, so as to produce the product with the non-woven fabric composite layer including the hard layer, the middle film and the soft layer of the required specification according to the manufacturing method.

In the aforementioned method of manufacturing a product with a non-woven fabric composite layer of different hardnesses, the product with the non-woven fabric composite layer comprises a hard layer, a middle film and a soft layer, and the hard layer has a specification with a thickness of 2~7mm and a weight of 600~1200g/m², and the middle film is a plastic film barrier layer having a thickness of 30~75µ, and the soft layer has a specification with a thickness of 15~40mm and a weight of 600~1200g/m²; and the method comprises the following steps:
(1) Pre-mold a first non-woven fabric material to form the hard layer of the required specification, pre-mold a second non-woven fabric material to form the soft layer of the required specification, and mold the middle film.
(2) Attach the first non-woven fabric material, the middle film and the second non-woven fabric material to one another to produce an intermediate product, such that the middle film is disposed between the first non-woven fabric material and the second non-woven fabric material.
(3) Transfer the intermediate product by a conveyor belt into a constant-temperature oven for heating, and heat the intermediate product at a heating temperature of 180±20°C for a heating time of at least 200 seconds per intermediate product to soften the first non-woven fabric material and the second non-woven fabric material sufficiently, and couple the attached surfaces by a thermal fusion process.
(4) Transfer the intermediate product from the constant-temperature oven to a mold with unequal material thicknesses to perform a primary hot press molding to press and mold the first non-woven fabric material into the hard layer of the required specification, and press and mold the second non-woven fabric material into the soft layer of the required specification, so as to manufacture the product with the non-woven fabric composite layer comprised of the hard layer, the middle film and the soft layer of the required specifications.

In the aforementioned method of manufacturing a product with a non-woven fabric composite layer of different hardnesses, the intermediate product is driven by a conveyor belt into the constant-temperature oven sequentially for the heating operation; and the intermediate product is clamped on the conveyor belt sequentially by an automatic clamping device for the operation.

In the aforementioned method of manufacturing a product with a non-woven fabric composite layer of different hardnesses, the intermediate product is driven by a conveyor belt to enter into the constant-temperature oven for the heating operation at a continuous low speed or in an on-and-off mode.

In the aforementioned method of manufacturing a product with a non-woven fabric composite layer of different hardnesses, the intermediate product is transferred from the constant-temperature oven to a mold with unequal material thicknesses and clamped and positioned by an automatic material clamping device.

In the aforementioned method of manufacturing a product with a non-woven fabric composite layer of different hardnesses, the mold with unequal material thicknesses further includes a vacuum suction device installed in a lower mold for sucking and pulling the bottom of the intermediate product to be attached to the lower mold quickly in the molding process to accelerate the overall shaping speed.

In the aforementioned method of manufacturing a product with a non-woven fabric composite layer of different hardnesses, the product with the non-woven fabric composite layer is removed from the mold with unequal material thicknesses by an automatic material clamping device sequentially.

In the aforementioned method of manufacturing a product with a non-woven fabric composite layer of different hardnesses, the product with the non-woven fabric composite layer is removed from the mold with unequal material thicknesses and put into a cooling fan box for cooling and shaping.

### BRIEF DESCRIPTION OF THE DRAWINGS

FIG. 1a and 1b are an exploded view and a schematic view of a conventional structure respectively;
FIG. 2 is a manufacturing flow chart of a conventional non-woven fabric;
FIG. 3 is a schematic view of a preferred embodiment of the present invention; and
FIG. 4 is a manufacturing flow chart of a preferred embodiment of the present invention.

### DETAILED DESCRIPTION OF THE PREFERRED EMBODIMENTS

The technical characteristics, measures, effects and advantages of the present invention will become apparent with the detailed description of preferred embodiment accompanied with the illustration of related drawings as follows.

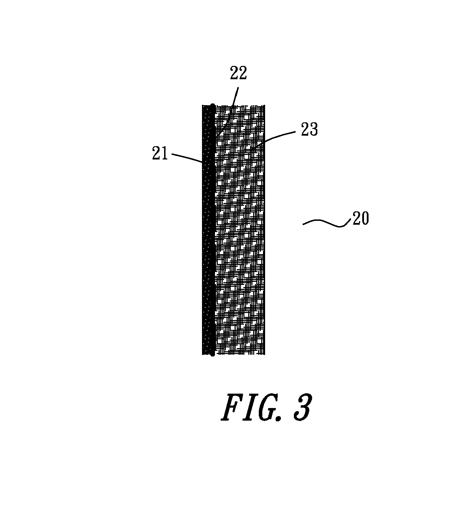

The present invention relates to a method of manufacturing a product with a non-woven fabric composite layer used for molding a double-sided product of different hardnesses on both sides, so that the invention is applicable for manufacturing any product with a non-woven fabric composite layer. For simplicity, an automobile interior material 20 is used as an example for illustrating the present invention. With reference to FIG. 3, the automobile interior material 20 has a structure comprising a hard layer 21, a middle film 22 and a soft layer 23, wherein the hard layer 21 is a cover layer having a specification with a thickness (t) of 2~7mm and a weight of 600~1200g/m², and this layer is a layer with a relatively greater hardness and a sound insulation effect, so that this layer is usually installed at a position that is not touched by the driver or passengers; the soft layer 23 is a PAD layer having a specification with a thickness (t) of 15~40mm and a weight of 600~1200g/m², and this layer has a relatively smaller hardness and softer to provide the sound absorption, so that this layer is usually installed at a position which is touched by the driver or passengers; and the middle film 22 is a plastic film barrier layer with a thickness (t) of 30~75µ and formed between the hard layer 21 and the soft layer 23 for enhancing the overall sound absorption and sound insulation performance.

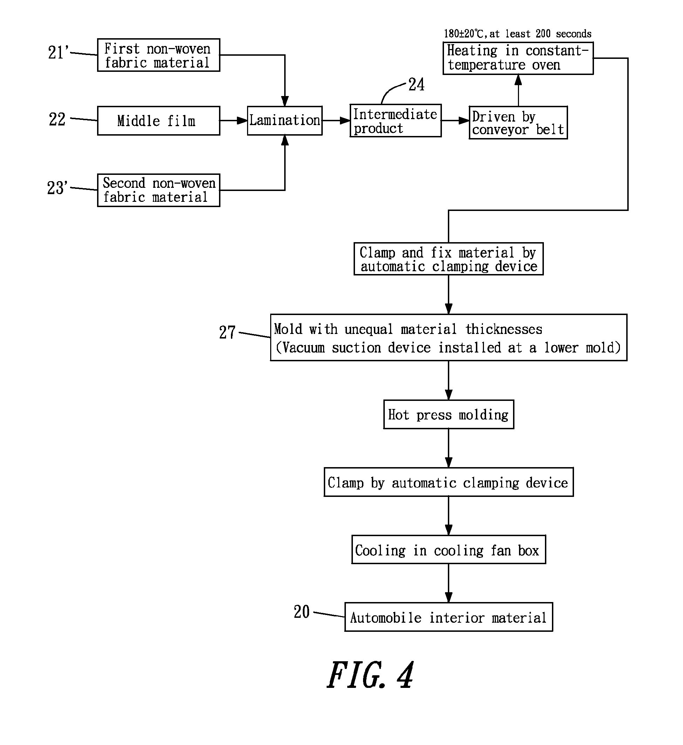

With reference to FIG. 4 for the flow chart of a method of manufacturing a product which is the automobile interior material 20, the method comprises the following steps:
(1) Pre-mold a first non-woven fabric material 21' and a second non-woven fabric material 23' into the hard layer 21 and the soft layer 23 of the required specification respectively, and mold the middle film 22 at the same time. In other words, the non-woven fabric material 21', the middle film 22 and the second non-woven fabric material 23' are prepared in advance.
(2) Attach the first non-woven fabric material 21', the middle film 22 and the second non-woven fabric material 23' to one another, so that the middle film 22 is aligned and attached evenly with and disposed between the first non-woven fabric material 21' and the second non-woven fabric material 23' to produce an intermediate product 24. In other words, each intermediate product 24 is comprised of the first non-woven fabric material 21', the middle film 22 and the second non-woven fabric material 23' attached to one another.
(3) Put the intermediate product 24 into a constant-temperature oven and heat the intermediate product 24 at a heating temperature of 180±20°C for a heating time at least 200 seconds, so that the first non-woven fabric material 21', the middle film 22 and the second non-woven fabric material 23' are heated sufficiently and softened, and couple the attached surfaces by a thermal fusion process. Wherein, the intermediate product 24 is driven sequentially by a conveyor belt into the constant-temperature oven for the heating operation, and the intermediate product 24 is driven by a continuous low speed or in an on-and-off mode. The intermediate product 24 is put onto the conveyor belt sequentially and manually, or clamped sequentially by an automatic clamping device.
(4) Transfer the intermediate product 24 from the constant-temperature oven to a mold with unequal material thicknesses 27 to perform a primary hot press molding, so that the first non-woven fabric material 21' is pressed and molded to form the hard layer 21 of the required specification, and the second non-woven fabric material 23' is pressed and molded to form the soft layer 23 of the required specification, so as to manufacture and the automobile interior material 20 comprising the hard layer 21, the middle film 22 and the soft layer 23. Wherein, the intermediate product 24 can be transferred sequentially from the constant-temperature oven into a mold with unequal material thicknesses 27 by an automatic material clamping device. The mold with unequal material thicknesses 27 further includes a vacuum suction device installed in a lower mold for sucking and pulling the bottom of the intermediate product to be attached to the lower mold quickly in the molding process to accelerate the overall shaping speed.
(5) Transfer the molded automobile interior material 20 from the mold with unequal material thicknesses 27 to a cooling fan box to perform quick cooling and shaping. Wherein, the molded automobile interior material 20 is clamped and removed from the mold with unequal material thicknesses 27 by an automatic material clamping device.

The automobile interior material 20 manufactured according to the steps of the aforementioned manufacturing method generally requires further trimming of edges of profile by a hydraulic punching and shearing machine to meet the required specifications. However, this is just an auxiliary step and not necessarily included in the manufacturing method of the present invention.

As described above, the method of the foregoing embodiment of the present invention is applied for manufacturing a three-layer composite automobile interior material 20. Similarly, the method also can be applied for manufacturing a double-layer product (just including the hard layer 21 and soft layer 23) when the effect and the manufacturing cost of the automobile interior material 20are taken into consideration, and thus the manufacturing method of the present invention does not include the middle film 22. In other words, a first non-woven fabric material 21' and a second non-woven fabric material 23' are attached to each other to produce an intermediate product 24, and the same remaining steps are carried out to produce the automobile interior material 20 comprised of the hard layer 21 and the soft layer 23 of the required specification.

The manufacturing method of the present invention disclosed by the invention has been tried for numerous times in factories, and the trials show that this method can be used for manufacturing high-quality products. Compared with the prior art, the manufacturing method of the present invention has the following advantages and effects:
1. Since the manufacturing method of the present invention simply requires the mold with unequal material thicknesses 27 (and saves the mold with equal material thickness) to produce the automobile interior material 20 of the required specification by hot press molding, so as to save the equipment cost and shorten the manufacturing process. Overall speaking, the present invention has a lower manufacturing cost and a higher production capacity than the prior art.
2. The first non-woven fabric material 21' and the second non-woven fabric material 23' are attached to each other and then jointly heated in the constant-temperature oven in the present invention, regardless of having or not having the middle film 22, and then put into the mold with unequal material thicknesses 27 for the hot press molding to produce the automobile interior material 20 of the required specification. In the hot press molding process in the mold with unequal material thicknesses 27, both of the first non-woven fabric material 21' and the second non-woven fabric material 23' are pushed by an inner-wall curved surface (and curvature) of the mold to form the hard layer 21 and the soft layer 23, so that the bending (forming) pressures of the first non-woven fabric material 21' and the second non-woven fabric material 23' are the same, and the hard layer 21 and the soft layer 23 of the automobile interior material 20 with the same shape and curvature can be attached closely to each other, and there is no hollow or poor attachment between the hard layer 21 and the soft layer 23. The products manufactured by the method of the present invention have a high quality to meet the requirements for the sound absorption and insulation of the products of the automobile interior material 20 and extend the service life of the products.

In summation of the description above, the method of manufacturing a product with a non-woven fabric composite layer of different hardnesses attaches a first non-woven fabric material and a second non-woven fabric material with each other to produce an intermediate product, puts and heats the intermediate product into a constant-temperature oven at a temperature of 180±20°C for at least 200 seconds, and then transfer the intermediate product into a mold with unequal material thicknesses to perform a primary hot press molding, so as to produce the product with a non-woven fabric composite layer including a hard layer and a soft layer of the required specification. After the product with the non-woven fabric composite layer is demolded from the mold with unequal material thicknesses, the product is put into a cooling fan box for quick cooling and shaping.

Obviously, the present invention improves over the prior art and complies with the patent application requirements, and this is duly filed for patent application. While the invention has been described by means of specific embodiments, numerous modifications and variations could be made thereto by those skilled in the art without departing from the scope and spirit of the invention set forth in the claims.

## Claims

1. A method for manufacturing non-woven composite layer product with different hardnesses, and the product with a non-woven fabric composite layer comprising a hard layer and a soft layer, and the hard layer having a specification with a thickness of 2~7mm and a weight of 600~1200g/m², and the soft layer having a specification with a thickness of 15~40mm and a weight of 600~1200g/m², the method comprising the steps of:
(1) pre-molding a first non-woven fabric material to form the hard layer of the required specification and pre-molding a second non-woven fabric material to form the soft layer of the required specification;
(2) laminating the first non-woven fabric material with the a second non-woven fabric material to produce an intermediate product;
(3) heating the intermediate product in a constant-temperature oven at a heating temperature of 180±20°C for a heating time of at least 200 seconds per intermediate product to soften the first non-woven fabric material and the second non-woven fabric material sufficiently, and coupling the attached surfaces by a thermal fusion process;
(4) transferring the intermediate product from the constant-temperature oven to a mold with unequal material thicknesses to perform a primary hot press molding to press and mold the first non-woven fabric material into the hard layer of the required specification, and press and mold the second non-woven fabric material into the soft layer of the required specification, so as to manufacture the product with the non-woven fabric composite layer comprised of the hard layer and the soft layer of the required specifications.

2. The method for manufacturing non-woven composite layer product with different hardnesses according to claim 1, wherein the product with the non-woven fabric composite layer further comprises a middle film disposed between the hard layer and the soft layer and made of plastic and molded into a film barrier layer with a thickness of 30~75µ; and the first non-woven fabric material and the middle film and a second non-woven fabric material are attached to each other to produce an intermediate product in the manufacture, so as to produce the product with the non-woven fabric composite layer including the hard layer, the middle film and the soft layer of the required specification according to the manufacturing method.

3. A method for manufacturing non-woven composite layer product with different hardnesses, and the product with the non-woven fabric composite layer comprising a hard layer, a middle film and a soft layer, and the hard layer having a specification with a thickness of 2~7mm and a weight of 600~1200g/m², and the middle film being a plastic film barrier layer having a thickness of 30~75µ, and the soft layer having a specification with a thickness of 15~40mm and a weight of 600~1200g/m²; and the method comprising the steps of:
(1) pre-molding a first non-woven fabric material to form the hard layer of the required specification, pre-molding a second non-woven fabric material to form the soft layer of the required specification, and molding the middle film;
(2) laminating the first non-woven fabric material, the middle film and the second non-woven fabric material with one another to produce an intermediate product, such that the middle film is disposed between the first non-woven fabric material and the second non-woven fabric material;
(3) transferring the intermediate product by a conveyor belt into a constant-temperature oven for heating, and heating the intermediate product at a heating temperature of 180±20°C for a heating time of at least 200 seconds per intermediate product to soften the first non-woven fabric material and the second non-woven fabric material sufficiently, and coupling the attached surfaces by a thermal fusion process;
(4) transferring the intermediate product from the constant-temperature oven to a mold with unequal material thicknesses to perform a primary hot press molding to press and mold the first non-woven fabric material into the hard layer of the required specification, and press and mold the second non-woven fabric material into the soft layer of the required specification, so as to manufacture the product with the non-woven fabric composite layer comprised of the hard layer, the middle film and the soft layer of the required specifications.

4. The method for manufacturing non-woven composite layer product with different hardnesses according to claim 1 or 3, wherein the intermediate product is driven by a conveyor belt into the constant-temperature oven sequentially for the heating operation; and the intermediate product is clamped on the conveyor belt sequentially by an automatic clamping device for the operation.

5. The method for manufacturing non-woven composite layer product with different hardnesses according to claim 4, wherein the intermediate product is driven by a conveyor belt to enter into the constant-temperature oven for the heating operation at a continuous low speed or in an on-and-off mode.

6. The method for manufacturing non-woven composite layer product with different hardnesses according to claim 1 or 3, wherein the intermediate product is transferred from the constant-temperature oven to a mold with unequal material thicknesses and clamped and positioned by an automatic material clamping device.

7. The method for manufacturing non-woven composite layer product with different hardnesses according to claim 1 or 3, wherein the mold with unequal material thicknesses further includes a vacuum suction device installed in a lower mold for sucking and pulling the bottom of the intermediate product to be attached to the lower mold quickly in the molding process to accelerate the overall shaping speed.

8. The method for manufacturing non-woven composite layer product with different hardnesses according to claim 1 or 3, wherein the product with the non-woven fabric composite layer is removed from the mold with unequal material thicknesses by an automatic material clamping device sequentially.

9. The method for manufacturing non-woven composite layer product with different hardnesses according to claim 1 or 3, wherein the product with the non-woven fabric composite layer is removed from the mold with unequal material thicknesses and put into a cooling fan box for cooling and shaping.
